# EUROPEAN PATENT SPECIFICATION

(11) **EP 0 497 182 B1**
(45) Date of publication and mention of the grant of the patent: **12.04.1995**
(21) Application number: 92100884.3
(22) Date of filing: 20.01.1992
(51) Int. Cl.: B23D 31/00, B23D 33/00

(54) **Machine to shear the leading end and take samples from coils of strip**
Maschine zum Scheren des vorderen Endes und zur Entnahme von Probenstücken von einem auf eine Wickelrolle gewickelten Band
Machine pour ébouter l'extrémité avant et pour prélever des échantillons d'un ruban enroulé en couronne

(30) Priority: 28.01.1991 IT UD910013
(43) Date of publication of application: 05.08.1992
(73) Proprietor: DANIELI & C. OFFICINE MECCANICHE S.p.A., 33042 Buttrio (UD) (IT)
(72) Inventor: Dorigo, Alessandro, I-33100 Udine (IT); Di Giusto, Bruno, I-33100 Udine (IT)
(74) Representative: Petraz, Gilberto Luigi

(56) References cited:
- EP-A- 0 044 923
- EP-A- 0 114 935
- EP-A- 0 299 220
- FR-A- 2 459 100
- GB-A- 1 221 599
- GB-A- 2 068 796

## Description

This invention concerns a machine to shear the leading end and take samples from cold coils of hot rolled strip, as set forth in the precharacterising part of the main claim; see e.g. EP-A 0 044 923.

Machines to shear the leading end and take samples from cold coils of hot rolled strip according to this invention are normally employed downstream of lines for the rolling of strip.

In the state of the art the shearing of only the leading end of cold strip rolled in coils and also the shearing of a sample of the strip are carried out in several steps by employing a plurality of machines.

The sample is normally taken from the second or third outer spiral of the coil.

Elimination of the end portion of the strip is made necessary in view of the geometric conditions of that end portion and also, in some cases, in view of the physical conditions too of that end portion.

One or more samples have to be taken for analysis so as to obtain all physical and chemical parameters of the material and of the strip produced.

These shearing operations take place in suitable stations to which the trolleys bearing the coils are conveyed.

The coils are drawn from a stock or from the conveyor line downstream of the rolling line and are normally deposited again in cooperation with the other coils at the end of the operations to shear the leading end and take samples.

The fact that several machines are used at present to carry out these operations, especially when the operations are effected in line with the rolling line, slows down considerably the whole cycle of forming the coils and thus has a great effect on the final product cost.

To obviate this shortcoming and achieve further advantages, the present applicant has studied, tested and embodied the following invention.

This invention is set forth and characterized in the main claim, while the dependent claims describe variants of the idea of the embodiment.

The main purpose of the following invention is to provide a machine able to carry out in sequence on one and the same coil the operation of shearing the leading end of the strip and the shearing operation to take a sample or samples.

A purpose of the invention is also to embody a machine suitable to work on coils of different dimensions and on coils in which the strip is unwound from below or from above.

The samples are normally taken by unwinding the coil by one or more spirals and shearing one or more portions of strip.

As compared to the state of the art, this invention enables the time of carrying out the above operations to be reduced considerably and therefore the stay time of the coil in the performance of these operations to be reduced with great financial benefit.

The machine according to the invention comprises:
- a support and unwinding unit,
- an engagement, guiding and pre-straightening headstock,
- a shears which is advantageously but not necessarily able to rotate and
- a collection unit.

The individual coil is taken from its position by suitable conveyor means and placed on the support and unwinding unit.

The coil, which, as we said above, may have various outer diameters, is rotated by the support and unwinding unit and its rotation will be congruous with the actual direction of winding of the strip.

The headstock that engages, guides and pre-straightens the strip is caused to cooperate with the periphery of the coil during this controlled rotation.

The headstock that engages, guides and pre-straightens the strip is capable of two adjustments of position both as regards the coil in relation to the diameter thereof and as regards the strip in relation to the winding thereof.

The engagement, guiding and pre-straightening headstock comprises frontal shoe means suitable to be positioned on the periphery of the coil between the leading end of the coil and the successive spiral, thereby arranging, in cooperation with the rotation of the coil, to detach the leading end of the coil and to convey that leading end through straightening means.

The straightening means may be a part of the headstock or be independent or else be partly independent.

The straightening means comprise means to control the reciprocal positions of rolls and are equipped advantageously with at least one powered roll.

The pre-straightened strip is conveyed towards the rotary shears and is caused to slide along the necessary length congruous with the leading end portion to be removed, and then the leading end of the strip is sheared.

The scrap thus produced is conveyed towards the collection unit, which comprises an appropriate bin to receive the scrap.

The shearing operation cuts the whole width of the strip.

Rotation of the coil and unwinding of the strip are continued, and the required samples are taken by two or more shearing operations at the chosen part of the strip and are conveyed into the collection unit, which comprises an appropriate bin for samples.

So as to convey the scrap and the samples correctly, the collection unit comprises at least one appropriate chute element.

At the end of the sampling cycle the strip is fully rewound on the coil.

To carry out complete rewinding, the engagement, guiding and pre-straightening headstock, with its own means or with the help of the straightening means, which in this case perform a curve-forming action, re-produces on the strip being wound the desired necessary curve congruous with the dimensions of the coil.

The attached figures, which are given as a non-restrictive example, show an example of the embodiment of this invention as follows:-
- Fig.1: is a plan view of a plant in which the present invention can be positioned;
- Fig.2: is a side diagrammatic view of a machine according to this invention;
- Fig.3: shows a detail of Fig.2.

A machine 10 according to this invention to shear the leading end and take samples from a coil 11 of strip consists substantially of:
- a support and unwinding unit 12,
- an engagement, guiding and pre-straightening headstock 13,
- a rotary shears 14 and
- a collection unit 15.

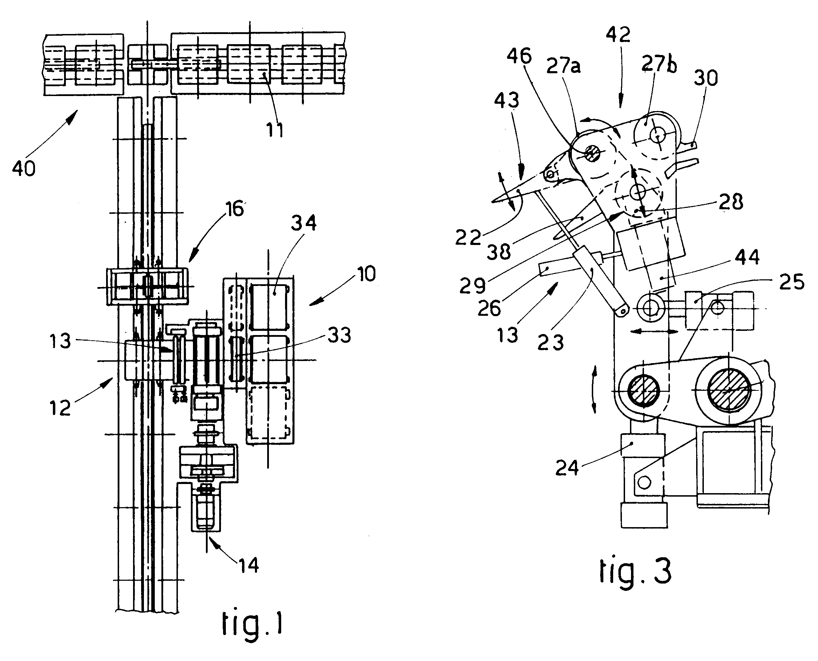

With reference to Fig.1, the coil 11 is taken by a suitable conveyor trolley 16 from a conveyor line 40 located downstream of a strip hot-rolling train and is deposited on the support and unwinding unit 12 on a service cradle 17, which in this example consists of two powered rolls 18.

The coil 11, which may have various diameters, is aligned and secured on the cradle 17 by clamping means 41, which in this case are borne on a pressure arm 19.

Pressure rolls 21 borne by an orientation and positioning support 20 are included at the end of the pressure arm 19.

The coil 11 in this position is set in a rotation congruous with the actual direction of winding of the strip on the coil 11.

The engagement, guiding and pre-straightening headstock 13 is also caused to cooperate on the outer surface of the coil 11.

In this example the engagement, guiding and pre-straightening headstock 13 comprises also straightening and curve-forming means 42, which could also be independent of strip-engagement means 43.

In this case the strip-engagement means 43 include two shoes, namely a first shoe 22 and a second shoe 38 respectively, suitable to be placed between the leading end and the next spiral of the strip so as to separate the leading end and to convey that end and the strip in the desired direction.

The engagement, guiding and pre-straightening headstock 13 can be adjusted in height by a first actuator 24 and in a direction radial to the coil by a second actuator 25 or a third actuator 26.

These adjustments are made possible so as to have a correct, congruous positioning of the engagement, guiding and pre-straightening headstock 13 in relation to the size of the coil and in relation to the actual direction of winding of the strip.

In this example one of the two shoes, namely the first shoe 22, can also be positioned independently by a fourth actuator 23.

The actuators 23-24-25-26 may consist of pneumatic or hydraulic cylinder/piston actuators or linear motors or other means suitable for the purpose.

As we said above, the engagement, guiding and pre-straightening headstock 13 comprises straightening and curve-forming means 42, which in this case consist of a front guide roll 27a and a rear guide roll 27b and an abutment roll 28.

The abutment roll 28 can be positioned by a fifth actuator 44 in relation to the front and rear guide rolls 27a-27b.

The coil 11 is rotated and in this example the first shoe 22 is placed between the leading end of the strip and the next spiral, thus causing the leading end to become separated and to unwind and be introduced within the engagement, guiding and pre-straightening headstock 13.

During this step the leading end of the strip and the strip itself are guided by the engagement, guiding and pre-straightening headstock 13.

The unwinding of the strip can take place in either direction, depending on the direction of unwinding of the strip at the time when the coil 11 lies in the support and unwinding unit 12.

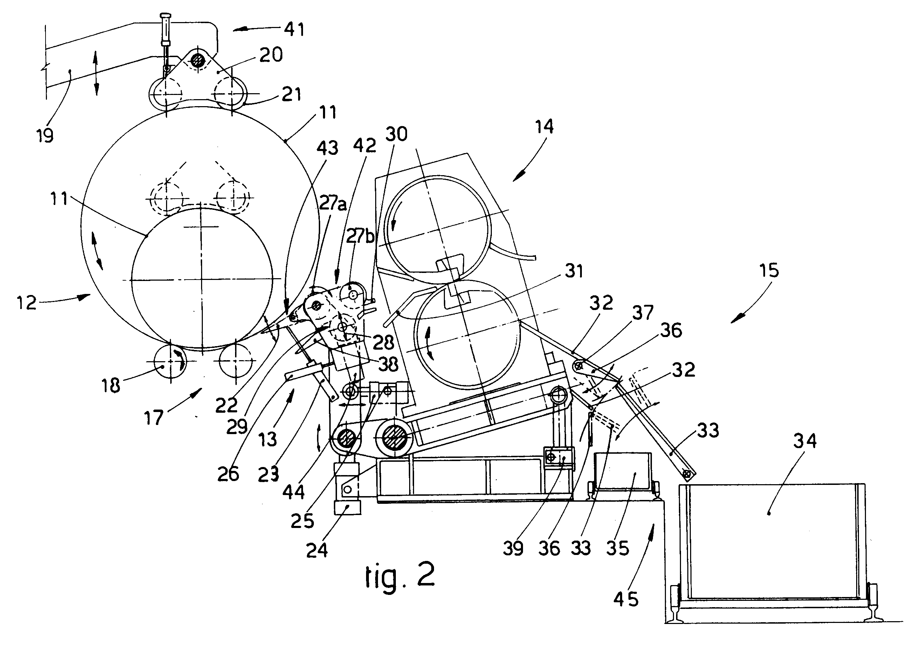

If the unwinding takes place in the opposite direction to that shown in Fig.2, the second shoe 38 is placed in the operating position.

The engagement, guiding and pre-straightening headstock 13 is positioned suitably so as to make the second shoe 38 cooperate with the surface of the coil 11.

The rotary shears 14 too comprises a position-adjustment actuator 39 to place the shears 14 in proper cooperation with the outlet of the strip from the engagement, guiding and pre-straightening headstock 13.

As we said above, the straightening and curve-forming means 42 include the front 27a and rear 27b guide rolls, which in this example are powered rolls.

The abutment roll 28 cooperates during unwinding with the front and rear guide rolls 27a-27b to straighten the strip but during winding cooperates only with the front guide roll 27a to perfom curve-forming of the strip.

Suitable guides 30 convey the strip from the engagement, guiding and pre-straightening headstock 13 to a lead-in 31 of the rotary shears 14, the lead-in 31 being of a known type and therefore unimportant for the purposes of the invention.

The strip is caused to slide by the required length and the shears 14 then shears the leading end portion of the strip.

In the successive continuous cycle of taking samples the feed of the strip and its shearing into sections are carried out continuously.

A first stationary chute 32 solidly fixed to the rotary shears 14 and a second movable chute 33 solidly fixed to a reception assembly 45 are included downstream of the rotary shears 14.

A chute connection element 36 pivoted at 37 on the first stationary chute 32 is comprised to adapt the length of the stationary chute 32 to the position of the rotary shears 14.

The second movable chute 33 can be positioned by suitable actuators and enables the leading end portion of the strip to be conveyed towards an appropriate scrap bin 34 and the samples to be conveyed towards a sample bin 35.

In this example the sample bin 35 is associated with a trolley for the speedy conveying of samples to an analytical laboratory.

When the rotary shears 14 is lowered by acting on the position-adjustment actuator 39, the chute connection element 36 is lowered and cooperates no longer with the movable chute 33.

At the end of the sampling cycle the strip is re-wound until it has been fully withdrawn from the rotary shears 14.

To carry out full rewinding it is necessary to eliminate the straightening produced on the trailing end of the strip during the unwinding step; For this purpose the engagement, guiding and pre-straightening headstock 13 performs a curve-forming action.

This curve-forming operation is achieved by rotating the engagement, guiding and pre-straightening headstock 13 about its centre of rotation 46 by means of the third actuator 26 and by adjusting the abutment roll 28 to cooperate suitably with the front guide roll 27a.

The curvature of the end of the strip is achieved by this curve-forming operationn and it is then possible to proceed with complete rewinding of the coil 11.

At the end of this operation the engagement, guiding and pre-straightening headstock 13 is re-positioned for the new cycle, the pressure arm 19 is raised and the conveyor trolley 16 proceeds with conveying the coil 11.

## Claims

1. Machine to shear the leading end and take samples from a rotating coil of strip (11), which comprises:
- a support and unwinding unit (12),
- an engagement headstock with engagement shoe means (22) associated with actuator means (23),
- a shears working on the plane of sliding of the strip and
- a collection unit (15),
the machine being characterized in that the shears is a flying shears (14) and is positioned downstream of the support and unwinding unit (12) and immediately downstream of the engagement headstock, and in that the engagement headstock cooperates with a first actuator (24) to adjust the height of the headstock and with radial positioner means consisting of a second actuator (25) and a third actuator (26), the third actuator (26) constituting a means to adjust inclination of the headstock, the engagement headstock comprising straightening and curve-forming means (42).

2. Machine as in Claim 1, in which the flying shears (14) includes a base pivoted on the side nearest to the coil of strip (11) and having its axis parallel to the axis of the coil (11), the base cooperating with means (39) that adjust the position of the shears (14), the shears (14) being associated downstream with chute means (36-33) to switch the path of scrap or samples, these chute means (36-33) having a first reciprocal position for delivery to a scrap bin (34) and at least one second reciprocal position for delivery to a sample bin (35).

3. Machine as in Claim 1 or 2, in which the straightening and curve-forming means (42) comprise two guide rolls (27a-27b) and an intermediate and facing abutment roll (28), which is able to be moved by means of an actuator joint (44) towards the guide rolls (27a-27b).

## Patentansprüche

1. Maschine zum Abschneiden des Anfangendes von einem rotierenden Streifencoil (11) und zum Entnehmen von Proben, welche aufweist:
- eine Abstütz-und Abwickeleinheit (12)
- einen Greifer-Haltekopf mit einem Greifschuhmittel (22), dem ein Antriebsmittel (23) zugeordnet ist,
- eine Schere, welche in der Gleitebene des Streifens arbeitet, und
- eine Sammeleinheit (15),
und die Maschine dadurch gekennzeichnet ist, daß die Schere eine fliegende Schere (14) ist, die stromab der Abstütz-und Abwickeleinheit (12) und unmittelbar stromab des Greifer-Haltekopfes angeordnet ist, und daß der Greifer-Haltekopf mit einem ersten Antrieb (24) zum Einstellen der Höhe des Haltekopfes und mit einem radialen Einstellmittel zusammenwirkt, welches aus einem zweiten Antrieb (25) und einem dritten Antrieb (26) besteht, wobei der dritte Antrieb (26) ein Mittel zum Einstellen der Neigung des Haltekopfes darstellt, und der Greifer-Haltekopf Mittel (42) zum Ausrichten und zum Krümmen besitzt.

2. Maschine nach Anspruch 1, bei welcher die fliegende Schere (14) einen Sockel besitzt, der an der dem Streifencoil (11) zunächst gelegenen Seite schwenkbar gelagert ist, wobei die Achse parallel zur Achse des Coils (11) verläuft, der Sockel mit einem Mittel zum Einstellen der Position der Schere (14) zusammenwirkt, der Schere (14) stromab ein Rutschermittel (36-33) zum Einschalten in den Weg des Abfalls oder der Proben zugeordnet ist, und dieses Rutschenmittel (36-33) eine erste Wechselstellung für die Ausgabe zu einem Schrottbunker (34) und zumindest eine zweite Wechselstellung für die Ausgabe zu einem Probenbunker (35) besitzt.

3. Maschine nach Anspruch 1 oder 2, bei welcher das Mittel (42) zum Ausrichten und Krümmen zwei Führungsrollen (27a-27b) und eine dazwischenliegende und entgegenstehende Abstützrolle (28) besitzt, welche mit Hilfe einer Antriebsverbindung (44) in Richtung der Führungsrollen (27a-27b) bewegt werden kann.

## Revendications

1. Machine pour cisailler l'extrémité de tête et prendre des échantillons d'une bobine tournante de feuillard (11), qui comporte:
- une unité (12) de support et de débobinage,
- une poupée d'accrochage, comportant des moyens d'accrochage à sabots (22) associés à des moyens d'actionnement (23),
- une cisaille travaillant sur le plan de glissement du feuillard, et
- une unité de collecte (15),
la machine étant caractérisée en ce que la cisaille est une cisaille volante (14) et est située en aval de l'unité (12) de support et de débobinage, et immédiatement en aval de la poupée d'accrochage, et en ce que la poupée d'accrochage coopère avec un premier dispositif d'actionnement (24) pour ajuster la hauteur de la poupée, et avec des moyens de positionnement radial consistant en un second dispositif d'actionnement (25) et un troisième dispositif d'actionnement (26), le troisième dispositif d'actionnement (26) constituant un moyen pour ajuster l'inclinaison de la poupée, la poupée d'accrochage comportant des moyens (42) de redressement et de cintrage.

2. Machine selon la revendication 1, dans laquelle la cisaille volante (14) comporte un socle pivotant du côté le plus proche de la bobine de feuillard (11), et dont l'axe est parallèle à l'axe de la bobine (11), le socle coopérant avec des moyens (39) qui ajustent la position de la cisaille (14), la cisaille (14) étant associée en aval à des moyens de trémie (36-33) pour changer le parcours pour les chutes ou les échantillons, ces moyens de trémie (36-33) ayant une première position de va-et-vient pour livraison dans un panier à chutes (34) et au moins une seconde positon de va-et-vient pour livraison dans un panier à échantillons (35).

3. Machine selon la revendication 1 ou 2, dans laquelle les moyens (42) de redressement et de cintrage comportent deux rouleaux de guidage (27a-27b) et un rouleau de butée intermédiaire (28) opposé, qui peut être dépassé en direction des rouleaux de guidage (27a-27b), au moyen d'un dispositif d'actionnement (44).
